# DEMANDE DE BREVET EUROPEEN

(11) **EP 4 753 121 A1**
(43) Date de publication de la demande: **03.06.2026**
(21) Numéro de dépôt: 25218661.4
(22) Date de dépôt: 26.11.2025
(51) Int. Cl.: H02K 3/52, H02K 15/122, H02K 3/487

(54) **ROTOR BOBINÉ POUR MACHINE ÉLECTRIQUE**

(30) Priorité: 29.11.2024 FR 2413187
(71) Demandeur: Valeo eAutomotive Germany GmbH, 91056 Erlangen (DE)
(72) Inventeur: BOUTINEAUD, Alexian, 62630 Etaples-sur-Mer (FR); MARGUERITTE, David, 62630 Etaples-sur-Mer (FR); JOZEFOWIEZ, Eric, 62630 Etaples-sur-Mer (FR)
(74) Mandataire: Valeo Powertrain Systems

(57) **Abrégé**

Un aspect de l'invention concerne un rotor bobiné pour machine électrique, comportant:
- un corps de rotor (15) cylindrique destiné à être monté autour d'un arbre de rotor, ledit corps de rotor comportant des dents (16) et des encoches (17) ouvertes s'étendant axialement en périphérie externe dudit corps de rotor,
- des bobinages électriques s'étendant axialement chacun autour d'une dent du corps de rotor,
- des cales isolantes (14) s'étendant axialement chacune dans une encoche du corps de rotor, entre deux bobinages consécutifs,
- une couche d'un vernis d'encollage répartie au moins sur les bobinages du rotor, et
- des réceptacles à vernis (141, 142) logés sur au moins une surface extérieure (14c) du rotor pour recevoir un surplus de vernis.

## Description

### DOMAINE TECHNIQUE DE L'INVENTION

La présente invention concerne un rotor bobiné pour machine électrique comportant des réceptacles à vernis assurant une réduction des effets de peau sur les vernis d'encollage des bobinages du rotor. L'invention concerne également une machine électrique comportant un tel rotor ainsi qu'un procédé de fabrication d'un tel rotor.

L'invention trouve des applications dans le domaine des machines électriques tournantes telles que les alternateurs, les moteurs électriques et les machines réversibles.

### ARRIERE-PLAN TECHNOLOGIQUE DE L'INVENTION

Il est connu, dans le domaine de l'automobile, d'utiliser des machines électriques dans de nombreuses fonctions, comme la propulsion des véhicules, les démarreurs de véhicule, etc. Ces machines électriques sont munies d'un stator comportant des aimants permanents ou des pôles bobinés (électroaimants) et entourant un rotor mobile. Le rotor est en rotation autour d'un axe central. Différents types de rotor existent dont le rotor bobiné qui comporte des conducteurs formant les bobinages du rotor. Une telle machine électrique est prévue pour fonctionner dans un mode « moteur », dans lequel le stator est alimenté électriquement et crée un champ tournant magnétique puis un couple relativement aux pôles inducteurs, entraînant le rotor en rotation, par exemple pour démarrer un moteur thermique. Associée à des fonctions électroniques spécifiques, cette machine électrique peut également fonctionner dans un mode « recharge » dans lequel le rotor en rotation induit une tension au stator qui la transforme en courant électrique pour recharger la batterie.

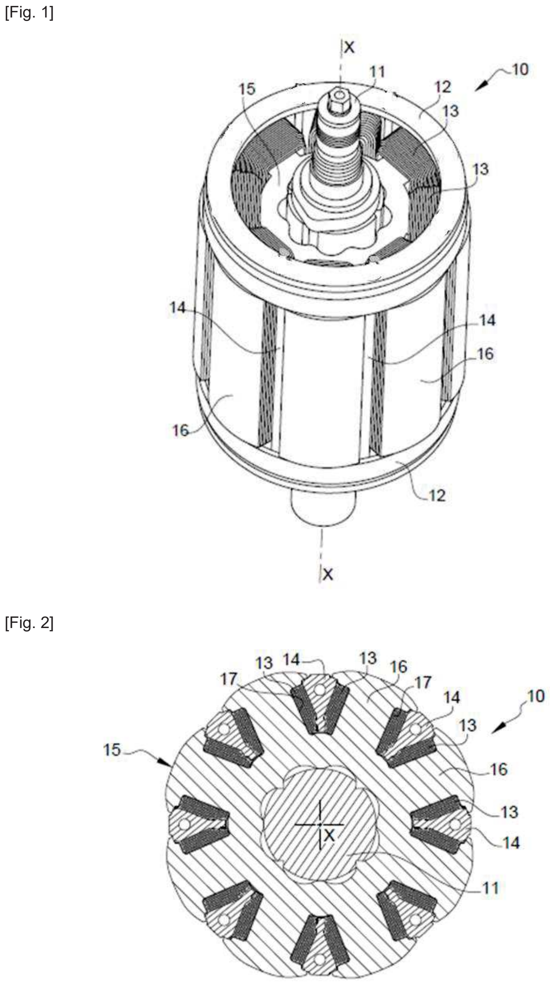

Un exemple d'un rotor bobiné 10 est représenté en perspective sur la figure 1 et selon une vue de dessus sur la figure 2. Ce rotor bobiné 10 comporte un corps 15 de forme cylindrique, formé par un empilage de tôles minces en forme de couronne, appelé paquet de tôles. Le corps de rotor 15 est monté autour d'un arbre de rotor 11 s'étendant le long d'un axe central XX. La surface extérieure du corps de rotor 15 comporte un ensemble de dents 16 et d'encoches 17 en alternance les unes avec les autres. Les dents 16 et les encoches 17 s'étendent axialement en périphérie externe du corps de rotor 15, suivant l'axe central XX. Les encoches 17 sont des cavités, ouvertes vers l'extérieur du corps de rotor 15, qui reçoivent des enroulements de phase connectés ensemble. Les enroulements sont obtenus généralement à partir d'un fil continu électriquement conducteur, généralement un fil en cuivre. Chaque enroulement forme un bobinage électrique 13 autour d'une dent 16 du corps de rotor. Un rotor bobiné 10 comporte donc le même nombre de bobinages 13, de dents 16 et d'encoches 17. Des cales isolantes 14 sont logées dans chacune des encoches 17 du corps de rotor 15. Autrement dit, une cale isolante 14, appelée simplement cale, est installée dans chaque encoche 17, entre deux dents 16 et deux bobinages 13 consécutifs. Chaque cale 14 s'étend axialement sur toute la hauteur des bobinages 13. Deux disques de verrouillage 12 sont montés de part et d'autre de l'ensemble des bobinages, en regard l'un de l'autre pour maintenir les éléments du rotor.

Un vernis d'encollage est généralement coulé le long des bobinages 13 pour assurer le maintien des enroulements entre eux aussi bien axialement que radialement. Ce vernis d'encollage, appelé plus simplement vernis, est coulé sur le rotor par une opération de trempage/roulage du rotor dans un bain de vernis. Plus précisément, le rotor 10 est plongé dans un bain de vernis, dans lequel il subit une rotation permettant d'imprégner les enroulements de vernis de sorte à fixer entre eux les fils électriques formant les bobinages et fixer les bobinages 13 sur le corps du rotor, tout en créant une isolation électrique autour desdits bobinages. Après l'opération de trempage/roulage, une opération de polymérisation permet de cuire le vernis sur le rotor. Pendant cette opération de polymérisation, le vernis a tendance à migrer sur la surface extérieure du rotor 10 qui est toujours en rotation. Cette migration du vernis sur la surface extérieure du rotor, et notamment sur la surface extérieure des dents 16 et la surface extérieure des disques 12, engendre une surépaisseur sur ces surfaces extérieures, et donc des effets de peau sur le rotor avec notamment le non-respect de l'entrefer entre la circonférence extérieure du rotor et la circonférence intérieure du stator. Ces effets de peau peuvent entraîner un risque de blocage de la machine électrique lors de sa mise en fonctionnement et, par conséquent, une mise au rebus de la machine ou la nécessité d'une reprise en usinage, ce qui génère dans tous les cas un surcoût de fabrication.

Il existe donc un réel besoin d'un rotor bobiné dont les effets de peau sont minimisés.

### RESUME DE L'INVENTION

Pour répondre aux problèmes évoqués ci-dessus de surépaisseur de vernis sur les surfaces extérieures du rotor, le demandeur propose un rotor bobiné muni de réceptacles à vernis permettant de recueillir le surplus de vernis de sorte à éviter les effets de peau sur les surfaces extérieures du rotor. Le demandeur propose également une machine électrique comportant un tel rotor ainsi qu'un procédé permettant de fabriquer ce rotor.

On appelle « surface extérieure » ou « face extérieure » d'un élément du rotor, les surfaces/faces de l'élément les plus éloignées radialement de l'axe central XX ou les surfaces/faces les plus éloignées axialement du cœur du rotor, c'est-à-dire de la tôle la plus centrale du paquet de tôles formant le corps de rotor. Par opposition, les « surfaces intérieures » ou « faces intérieures » d'un élément du rotor sont les surfaces/faces de l'élément les plus proches radialement de l'axe central XX ou les surfaces/faces les plus proches axialement du cœur du rotor.

Selon un premier aspect, l'invention concerne un rotor bobiné pour machine électrique, comportant :
- un corps de rotor cylindrique destiné à être monté autour d'un arbre de rotor d'axe de rotation XX, ledit corps de rotor comportant des dents et des encoches s'étendant axialement,
- des bobinages électriques s'étendant axialement chacun autour d'une dent du corps de rotor,
- des cales isolantes s'étendant axialement chacune dans une encoche du corps de rotor, entre deux bobinages consécutifs,
- une couche d'un vernis d'encollage répartie au moins sur les bobinages du rotor, et
- des réceptacles à vernis localisés sur au moins une surface extérieure du rotor pour recevoir un surplus de vernis.

Ce rotor présente l'avantage d'être équipé de réceptacles adaptés pour recevoir le surplus de vernis d'encollage, évitant ainsi les surépaisseurs générées par le surplus de vernis sur les surfaces extérieures du rotor. Ces réceptacles de réception du vernis présentent en outre l'avantage de maintenir les fils électriques des bobinages dans la structure interne du rotor.

On notera que les réceptacles à vernis selon l'invention se distinguent fonctionnellement et structurellement des orifices de fixation traversants destinés à recevoir des tirants ou des arbres. Contrairement à ces orifices de fixation qui sont destinés à être comblés par une pièce solide, les réceptacles de l'invention sont configurés pour rester au moins partiellement vides avant l'imprégnation, afin de définir un volume libre disponible pour capter et confiner l'excédent de vernis fluide migrant sur la surface extérieure

Outre les caractéristiques qui viennent d'être évoquées dans le paragraphe précédent, le rotor bobiné selon un aspect de l'invention peut présenter une ou plusieurs caractéristiques complémentaires parmi les suivantes, considérées individuellement ou selon toutes les combinaisons techniquement possibles :
- les réceptacles à vernis sont localisés sur une face extérieure des cales isolantes. Les cales isolantes n'ayant aucune incidence sur les performances du rotor, la présence de réceptacles dans les cales isolantes ne modifie en rien ses performances. Au sens de la présente invention, on entend par 'surface extérieure' ou 'face extérieure' d'une cale, la paroi de la cale destinée à être orientée radialement vers l'extérieur du rotor, c'est-à-dire en regard de l'entrefer et du stator. Cette surface extérieure se distingue des cavités internes ou des volumes structurels définis par la forme générale de la cale (comme un profil en U ou en V) qui seraient situés radialement sous les têtes de dents.
- les réceptacles à vernis sont ménagés dans l'épaisseur d'une paroi formant la surface extérieure du rotor.
- chaque cale isolante comporte, sur sa face extérieure, une surépaisseur dans laquelle sont formés les réceptacles à vernis. Comme pour les réceptacles à vernis, la présence d'une surépaisseur n'a pas d'effet sur les performances du rotor.
- les réceptacles à vernis comportent au moins un orifice traversant ou non-traversant.
- les orifices ont une section de forme circulaire ou oblongue.
- les réceptacles comportent au moins un rainurage assurant un écoulement du surplus de vernis.
- Les réceptacles à vernis présentent une surface extérieure formée par une alternance de reliefs (surépaisseurs) et de creux (rainures, orifices). Ceci permet de créer des zones de rétention locales réparties sur la face externe.
- les réceptacles comportent au moins un chanfrein s'étendant axialement sur la face extérieure de la cale, le long de la surépaisseur.
- le rainurage comporte un ensemble de rainures débouchant sur au moins un chanfrein, l'ensemble de rainures assurant un écoulement du surplus de vernis et le chanfrein assurant la retenue dudit surplus de vernis.
- les rainures de l'ensemble de rainures sont parallèles les unes aux autres et orientées suivant une direction oblique par rapport à un axe de l'arbre du rotor.
- les rainures de l'ensemble de rainures sont parallèles les unes aux autres et orientées suivant une direction perpendiculaire par rapport à un axe de l'arbre du rotor.
- le rainurage forme un réseau de drainage sur la face extérieure. Contrairement à des rainures de l'art antérieur visant uniquement à interrompre la conduction électrique de surface (réduction des courants de Foucault, les rainures sont agencées pour guider l'écoulement du vernis sous l'effet de la force centrifuge vers une zone de rétention située en retrait par rapport à l'entrefer

Un deuxième aspect de l'invention concerne une machine électrique comportant un rotor et un stator, le rotor étant conforme au rotor selon le premier aspect de l'invention.

Un troisième aspect de l'invention concerne un procédé de fabrication d'un rotor bobiné selon le premier aspect de l'invention, comportant les opérations suivantes :
- réalisation de réceptacles à vernis sur une surface extérieure d'un corps de rotor ou une face extérieure d'au moins une cale isolante,
- enroulement d'un fil électriquement conducteur autour des dents du corps de rotor pour créer des bobinages,
- montage de cales isolantes dans chaque encoche du corps de rotor, entre deux bobinages,
- installation de disques de verrouillage à chaque extrémité axiale des bobinages,
- trempage et roulage du rotor dans un bain de vernis, et
- polymérisation du rotor imprégné de vernis.

### BREVE DESCRIPTION DES FIGURES

D'autres avantages et caractéristiques de l'invention apparaîtront à la lecture de la description qui suit, illustrée par les figures dans lesquelles :
La figure 1, déjà décrite, représente une vue en perspective d'un rotor bobiné selon l'état de la technique ;
La figure 2, déjà décrite, représente une vue de dessus schématique d'un rotor bobiné selon l'état de la technique ;
La figure 3 représente une vue de dessus schématique d'une encoche entre deux bobinages d'un rotor bobiné selon l'état de la technique ;
La figure 4 représente une vue de dessus schématique d'une cale isolante logée dans une encoche de corps de rotor selon l'invention ;
La figure 5 représente une vue de face schématique d'une cale isolante selon un premier mode de réalisation de l'invention ;
La figure 6 représente une vue en perspective schématique d'une cale isolante selon un deuxième mode de réalisation de l'invention ;
La figure 7 représente une vue de face schématique d'une cale isolante selon le deuxième mode de réalisation de l'invention ;
La figure 8 représente une vue de face schématique d'une cale isolante selon un troisième mode de réalisation de l'invention ;
La figure 9 représente une vue de face schématique d'une cale isolante selon un quatrième mode de réalisation de l'invention ;
La figure 10 représente une vue de face schématique d'une cale isolante selon un cinquième mode de réalisation de l'invention ;
La figure 11 représente une vue en perspective d'une cale isolante selon un sixième mode de réalisation de l'invention ;
La figure 12 représente une vue de profil en coupe d'une cale isolante selon le sixième mode de réalisation de l'invention ; et
La figure 13 représente, sous la forme d'un diagramme fonctionnel, le procédé de fabrication du rotor bobiné selon l'invention.

### DESCRIPTION DETAILLEE

Des exemples de réalisation d'un rotor bobiné équipé d'un ou plusieurs réceptacles à vernis sont décrits en détail ci-après, en référence aux dessins annexés. Ces exemples illustrent les caractéristiques et avantages de l'invention. Il est toutefois rappelé que l'invention ne se limite pas à ces exemples.

Sur les figures, les éléments identiques sont repérés par des références identiques. Pour des questions de lisibilité des figures, les échelles de taille entre éléments représentés ne sont pas respectées.

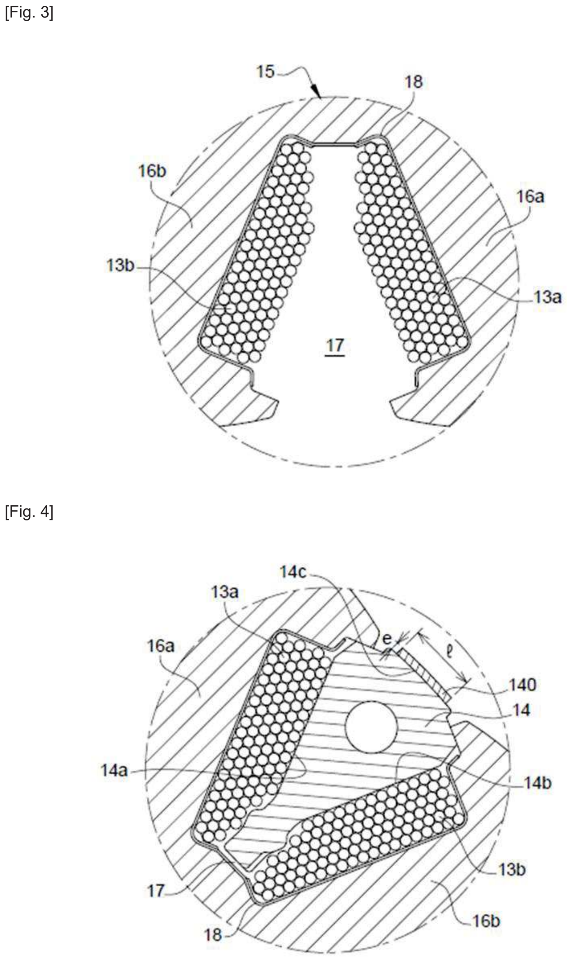

Un exemple d'une encoche 17 d'un corps de rotor 15 est représenté sur la figure 3. Comme expliqué en liaison avec les figures 1 et 2, le corps de rotor 15 est formé par un empilage de tôles minces en forme de couronne. La surface extérieure du corps de rotor 15 est munie de dents 16 et d'encoches 17 disposées en alternance les unes avec les autres. Les encoches 17 sont des cavités, ouvertes vers l'extérieur du corps de rotor 15, et recevant chacune une couche isolante 18, par exemple un papier isolant, ainsi que deux bobinages 13. Un bobinage 13 entoure une dent 16. Une encoche 17 est donc traversées par les bobinages 13 entourant les deux dents 16 adjacentes à ladite encoche 17. Dans l'exemple de la figure 3, l'encoche 17 est logée entre les dents 16a et 16b et reçoit une portion du bobinage 13a entourant la dent 16a et une portion du bobinage 13b entourant la dent 16b.

Comme représenté sur la figure 4, une cale isolante 14 (ou wedge en terminologie anglo-saxonne) est installée dans chaque encoche 17, entre les deux bobinages 13a et 13b qui traversent ladite encoche 17. La cale isolante 14, appelée plus simplement cale, a une forme adaptée à la forme de l'encoche 17 et est montée par glissement axial (parallèlement à l'axe central XX) à l'intérieur de l'encoche 17. La forme de la cale 14 est complémentaire de l'espace séparant les deux bobinages 13a, 13b à l'intérieur de l'encoche 17. Pour cela, la cale 14 comporte deux faces intérieures 14a, 14b en contact respectif avec les deux bobinages 13a, 13b et une face extérieure 14c débouchant à l'extérieur du corps de rotor 15 et s'étendant entre les dents 16a, 16b adjacentes. La cale 14 est fabriquée dans un matériau électriquement isolant, comme par exemple du plastique. La cale 14 permet ainsi non seulement de bloquer tangentiellement et radialement les bobinages 13 à l'intérieur de l'encoche 17 mais également d'isoler électriquement les deux bobinages 13a et 13b traversant la même encoche 17.

Selon l'invention, le rotor bobiné 10 est muni d'un ou plusieurs réceptacles adaptés pour recevoir le surplus de vernis durant les opérations de trempage/roulage du rotor dans le bain de vernis et de polymérisation du rotor imprégné de vernis. Ces réceptacles, ou réceptacles à vernis, sont des rainures ou des orifices, traversants ou non-traversants, formés sur une surface extérieure du rotor et dont le rôle est de recueillir le surplus du vernis s'écoulant sur les surfaces extérieures du rotor lorsque le rotor est en rotation pendant les opérations de trempage et/ou de polymérisation.

Dans certains modes de réalisation de l'invention, les réceptacles à vernis sont localisés sur les faces extérieures 14c des cales 14, c'est-à-dire la face des cales qui s'étend entre les faces extérieures des deux dents 16 adjacentes à ladite cale. De façon préférentielle, mais non obligatoire, au moins un réceptacle à vernis est formé sur la face extérieure de chaque cale 14 du rotor. Ce réceptacle à vernis peut se présenter sous la forme d'un orifice ou d'une rainure. Différents modes de réalisation des réceptacles vont être décrits, dans lesquels il sera considéré que chaque cale comporte plusieurs réceptacles ; l'homme du métier comprendra toutefois que les cales peuvent comporter un seul réceptacle et que certaines seulement des cales d'un rotor peuvent être équipées d'un ou de plusieurs de ces réceptacles.

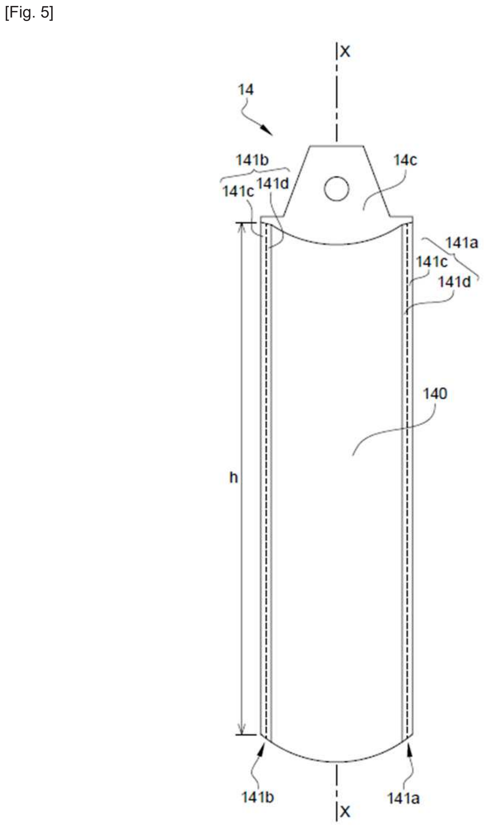

Dans certains des modes de réalisation, et comme représenté sur les figures 4 et 5, la cale 14 comporte, sur sa face extérieure 14c, une surépaisseur 140 s'étendant sur tout ou partie de la hauteur h de la cale. La hauteur h de la cale 14 est la dimension de ladite cale qui est mesurée axialement suivant l'axe XX ; la hauteur h de la cale 14 est approximativement égale à la hauteur des bobinages 13a, 13b s'étendant de part et d'autre de la cale 14.

La surépaisseur 140 peut s'étendre sur la totalité de la hauteur de la cale, entre les deux disques de verrouillage du rotor, ou uniquement sur une partie de cette hauteur. Cette surépaisseur a une largeur I, inférieure ou égale à la largeur de la face extérieure 14c de la cale 14 et une épaisseur e (par rapport à la face extérieure 14c d'origine de la cale) adaptée à la profondeur choisie pour les réceptacles. L'épaisseur e de la surépaisseur 140 peut au maximum être égale à la distance radiale entre la face extérieure 14c de la cale 14 et la face extérieure 16c des dents 16 adjacentes à ladite cale.

La surépaisseur 140 et la cale 14 sont monobloc, c'est-à-dire qu'elles forment une seule et unique pièce. Pour cela, la surépaisseur 140 est formée avec la cale 14, lors du procédé de fabrication de ladite cale. Si la cale est en plastique, la surépaisseur peut être formée par injection plastique dans un moule ayant la forme de la cale avec sa surépaisseur.

Dans un mode de réalisation représenté sur la figure 5, la cale 14 comporte une surépaisseur 140 s'étendant sur toute la hauteur h de la cale 14. Cette surépaisseur 140 a une forme arrondie, c'est-à-dire qu'elle présente une section en forme d'arc de cercle. Les réceptacles, dans ce mode de réalisation, sont formés par deux chanfreins 141a, 141b s'étendant axialement (parallèlement à l'axe central XX) de part et d'autre de la surépaisseur 140. Les chanfreins 141a, 141b comportent chacun une surface biseautée 141d débouchant sur une surface plate 141c, la surface biseautée 141d reliant la surépaisseur 140 et la surface plate 141c et permettant l'écoulement du vernis depuis ladite surépaisseur 140 jusqu'à ladite surface plate 141c. Ainsi, le surplus de vernis qui s'écoule sur la surépaisseur 140 migre, sous l'effet de la rotation du rotor, jusqu'aux chanfreins 141a, 141b où il est retenu sur les surfaces plates 141c desdits chanfreins, sans engendrer d'effet de peau sur la surface extérieure du rotor.

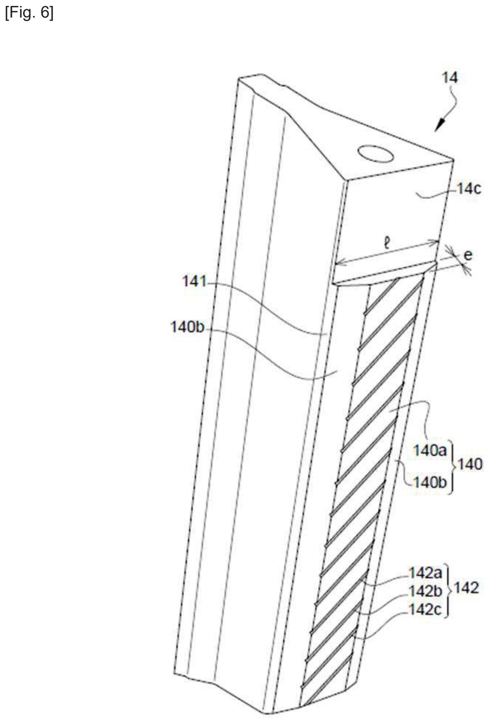

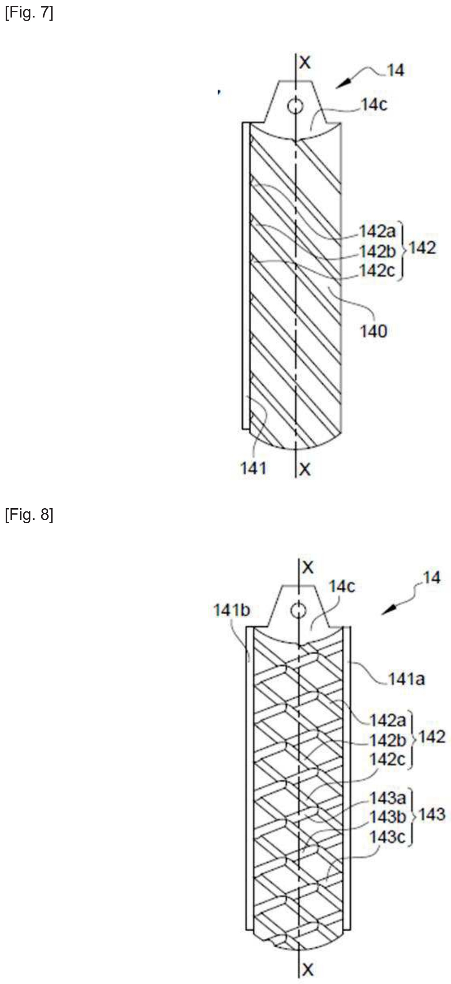

Dans un autre mode de réalisation, représenté sur les figures 6 et 7, la cale 14 comporte une surépaisseur 140 s'étendant sur toute la hauteur h de la cale 14 ou sur une partie seulement de la hauteur h. La surépaisseur 140 peut avoir une forme arrondie (c'est-à-dire une section en forme d'arc de cercle comme sur la figure 7 ou la figure 5) ou une forme trapézoïdale (comme sur la figure 6) avec une face plane extérieure 140a et deux faces latérales obliques 140b s'étendant chacune de part et d'autre de la face plane extérieure 140a jusqu'aux chanfreins respectifs 141b, 141a. Quelle que soit la forme de la surépaisseur 140 (arrondie ou trapézoïdale), cette dernière comporte plusieurs rainures ou stries 142a, 142b, 142c, formant un rainurage 142, débouchant sur un ou deux chanfrein(s) 141 tel que décrit dans le mode de réalisation de la figure 5. Ainsi, le surplus de vernis s'écoule par les rainures du rainurage 142 jusqu'au chanfrein 141 où il est retenu sur la surface plate 141c dudit chanfrein, sans engendrer d'effet de peau sur la surface extérieure du rotor. Dans le mode de réalisation des figures 6 et 7, les rainures du rainurage 142 sont parallèles les unes aux autres et orientées suivant une direction oblique par rapport à l'axe central XX, cette direction oblique favorisant l'écoulement du vernis vers l'un des chanfreins 141, lorsque le rotor est en rotation ; la cale 14 peut alors ne comporter qu'un seul chanfrein 141, le vernis s'écoulant le long des rainures du rainurage 142 vers le chanfrein 141 (cf. exemple de la figure 6). Bien entendu, dans le mode de réalisation des figures 6 et 7, les cales 14 peuvent également comporter deux chanfreins 141a, 141b, s'étendant de part et d'autre des rainures du rainurage 142 (variante non représentée sur les figures).

Dans un autre mode de réalisation, représenté sur la figure 8, la cale 14 comporte une surépaisseur 140 s'étendant sur toute la hauteur h de la cale 14 ou sur une partie seulement de la hauteur h. Cette surépaisseur 140 est identique à celle décrite précédemment en liaison avec les figures 6 et 7 et peut être de forme arrondie ou trapézoïdale. Quelle que soit la forme de la surépaisseur 140, cette dernière comporte un premier et un second ensembles de rainures ou stries, respectivement 142a, 142b, 142c et 143a, 143b, 143c, qui forment un double rainurage entrecroisé 142,143. Ce double rainurage entrecroisé 142, 143 comporte un premier rainurage 142 formé d'un ensemble de rainures 142a, 142b, 142c parallèles les unes aux autres et orientées suivant une première direction oblique par rapport à l'axe central XX, ce premier rainurage 142 étant identique à celui décrit en liaison avec la figure 7. Le double rainurage entrecroisé 142, 143 comporte également un second rainurage 143, formé d'un ensemble de rainures 143a, 143b, 143c parallèles les unes aux autres et orientées suivant une seconde direction oblique différente de la première direction oblique. Le second rainurage 143 forme, avec le premier rainurage 142, un maillage, appelé aussi double rainurage entrecroisé 142, 143. Les rainures du premier rainurage 142 débouchent sur un premier chanfrein 141a (tel que celui décrit dans le mode de réalisation de la figure 5) s'étendant axialement le long d'un premier côté du maillage 142, 143. Les rainures du second rainurage 143 débouchent sur un second chanfrein 141b, identique au premier chanfrein 141a mais s'étendant axialement le long d'un second côté du maillage 142, 143, symétrique au premier côté par rapport au maillage 142, 143. Dans ce mode de réalisation, le surplus de vernis s'écoule à la fois par le premier rainurage 142 jusqu'au premier chanfrein 141a et par le second rainurage 143 jusqu'au second chanfrein 141b, le vernis étant retenu dans les premier et second chanfreins sans engendrer d'effet de peau sur la surface extérieure du rotor.

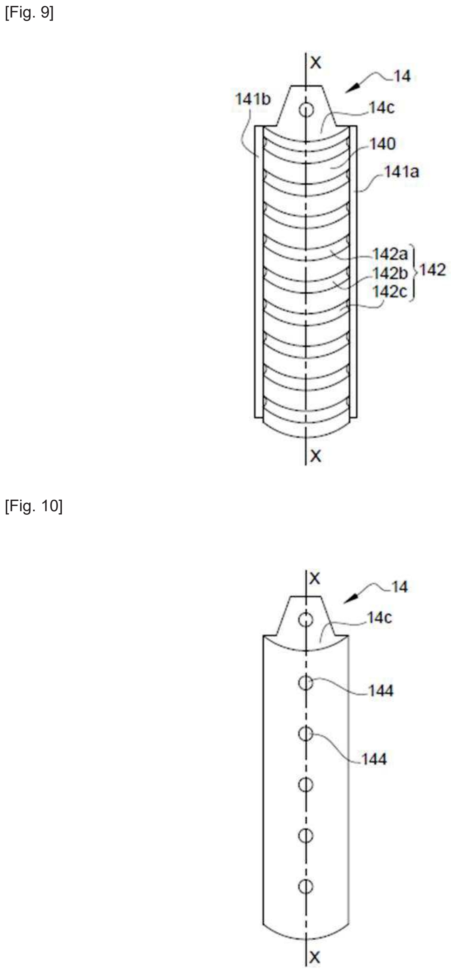

Dans un autre mode de réalisation, représenté sur la figure 9, la cale 14 comporte une surépaisseur 140 s'étendant sur toute la hauteur h de la cale 14 ou sur une partie seulement de la hauteur h. Cette surépaisseur 140 est identique à celle décrite précédemment en liaison avec les figures 6 et 7 et peut être de forme arrondie ou trapézoïdale. Quelle que soit sa forme, la surépaisseur 140 comporte plusieurs rainures ou stries 142a, 142b, 142c, formant un rainurage 142, débouchant sur deux chanfreins 141a et 141b, tels que celui décrit dans le mode de réalisation de la figure 5. Les deux chanfreins 141a, 141b sont identiques et s'étendent axialement de part et d'autre de la surépaisseur 140. Dans le mode de réalisation de la figure 9, les rainures du rainurage 142 sont parallèles les unes aux autres et orientées suivant une direction sensiblement perpendiculaire à l'axe central XX, Chaque rainure du rainurage 142 relie donc le premier chanfrein 141a avec le second chanfrein 141b, ce qui permet l'écoulement du vernis vers un des chanfreins, lorsque le rotor est en rotation. Ainsi, le surplus de vernis s'écoule par le rainurage 142 jusqu'aux chanfreins 141a, 141b où il est retenu sur les surfaces plates desdits chanfrein, sans engendrer d'effet de peau sur la surface extérieure du rotor.

La présence d'une surépaisseur (140) sur la face extérieure de la cale constitue un avantage technique particulier. Cette surépaisseur permet de ménager les réceptacles (rainures ou orifices) en profondeur sans affaiblir la structure mécanique principale de la cale isolante. De plus, cette surépaisseur crée une barrière physique guidant le vernis vers les zones de moindre rayon (les chanfreins), empêchant ainsi le vernis de migrer vers les têtes de dents voisines.

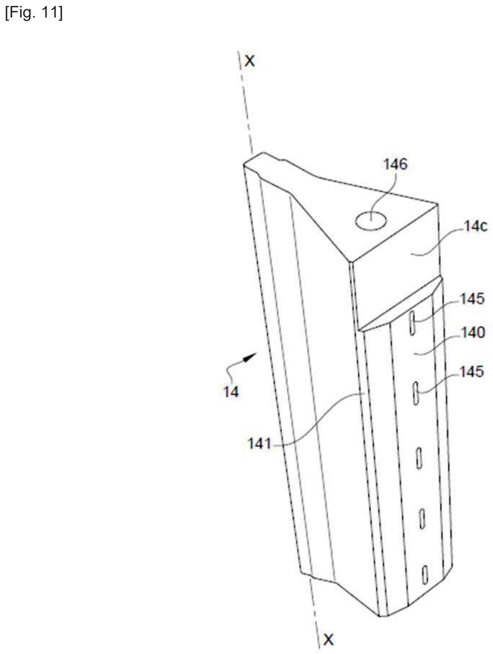

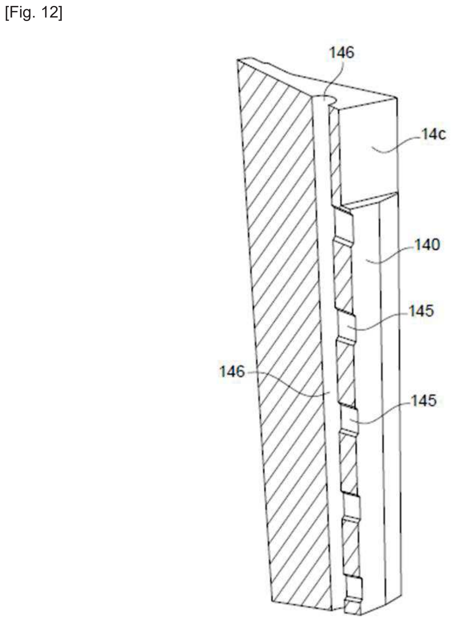

Dans d'autres modes de réalisation, tels que ceux représentés sur les figures 10, 11 et 12, la cale 14 comporte plusieurs orifices 144, 145 répartis sur la face extérieure 14c de ladite cale. Ces orifices 144, 145 peuvent être alignés suivant un axe longitudinal parallèle à l'axe central XX ou, au contraire, éparpillés régulièrement ou irrégulièrement sur la face extérieure à droite, à gauche et/ou au centre de la face extérieure. Ils peuvent être réalisés directement dans la face extérieure 14c de la cale 14 ou bien être réalisés sur une surépaisseur 140 comme celle décrite précédemment en liaison avec les figures 6 et 7. Ils peuvent être réalisés dans la cale 14 par perçage de ladite cale ou bien être formés dans la masse lors de la fabrication de la cale. Les orifices peuvent présenter une section circulaire (comme les orifices 144 de la figure 10) ou une section oblongue (comme les orifices 145 des figures 11 et 12), avec des parois droites (perpendiculaires à l'axe central XX) ou en biais (formant un angle non-droit par rapport à l'axe central XX). Dans une alternative représentée sur la figure 10, les orifices 144 sont des orifices aveugles, c'est-à-dire non traversants, dont le rôle est de retenir le surplus de vernis lorsque celui-ci s'écoule sur la face extérieure 14c de la cale pendant la rotation du rotor. Selon une autre alternative représentée sur les figures 11 et 12, les orifices 145 sont des orifices traversants, dont l'ouverture est reliée à un canal interne 146. Le canal interne 146 peut être une rigole formée à l'intérieur de la structure de la cale 14 et dans laquelle débouchent les orifices 145. Ainsi, le surplus de vernis s'écoule par les orifices 145 jusqu'au canal interne 146 où il est retenu sans engendrer d'effet de peau sur la surface extérieure du rotor.

L'homme du métier comprendra que toutes les variantes et alternatives décrites ci-dessus en liaison avec les figures 10 à 12 peuvent être combinées les unes avec les autres. Par exemple, des orifices de section circulaire peuvent être traversants et déboucher sur un canal interne ; de même des orifices de section oblongue peuvent être aveugles et/ou réalisés directement sur la surface extérieure 14c de la cale (sans surépaisseur) ; toutes les caractéristiques décrites en liaison avec les figures 10 à 12 peuvent ainsi être combinées, les combinaisons n'étant pas limitées aux représentations des figures 10, 11 et 12.

Dans tous les modes de réalisation décrits précédemment, les réceptacles à vernis, quels que soient leur forme, leur nombre et leur positionnement, sont logés dans la cale 14, ce qui a pour avantage que la structure même du rotor ne soit pas modifiée et que, par conséquent, les performances du rotor ne soient pas impactées par la présence des réceptacles.

Toutefois, selon une alternative non représentée sur les figures, les réceptacles peuvent être des rainures ou des orifices non-traversants formés sur la surface extérieure du corps de rotor 15, entre l'arbre de rotation 11 et les bobinages 13. Ces réceptacles peuvent être réalisés par emboutissage des tôles les plus extérieures du paquet de tôles formant le corps de rotor 15. Dans cette alternative, les performances du rotor doivent être ré-évaluées en fonction de la forme, du nombre et du positionnement des réceptacles à vernis.

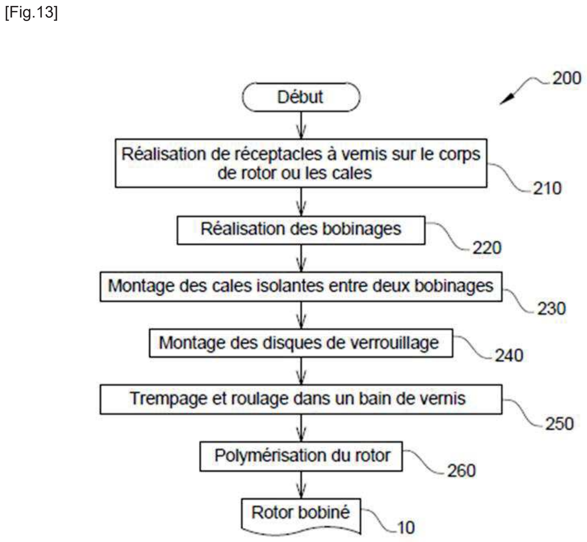

Quel que soit le mode de réalisation choisi, le rotor bobiné selon l'invention peut être réalisé en suivant les opérations du procédé 200 représenté sur la figure 13. La première opération 210 consiste à réaliser des réceptacles à vernis sur la surface extérieure du corps de rotor ou sur la face extérieure d'au moins une cale 14. Lorsque les réceptacles à vernis sont logés dans la cale 14, et que la cale 14 est en plastique, lesdits réceptacles peuvent être formés lors de la fabrication de la cale, par injection plastique. L'opération 220 suivante consiste à enrouler un fil électriquement conducteur autour des dents 16 d'un corps de rotor 15 pour créer des bobinages 13. Ces bobinages 13 sont reliés les uns aux autres selon n'importe laquelle des techniques habituelles. Une fois les bobinages 13 réalisés, de cales isolantes 14 sont montées (opérations 230) dans chaque encoche 17 du corps de rotor, entre deux bobinages adjacents afin d'encoller les enroulements de chaque bobinage entre eux et d'isoler les deux bobinages 13a, 13b traversant la même encoche 13. Le procédé 200 se poursuit par une opération 240 d'installation d'un disque de verrouillage 12 à chacune des extrémités axiales des bobinages 13, ces disques permettant le maintien des bobinages en place. Une opération 250 de trempage et roulage du rotor 10 dans un bain de vernis est ensuite réalisée afin d'encoller les enroulements de chaque bobinage entre eux et assurer une isolation électrique de chaque bobinage. Enfin, une opération 260 de polymérisation du rotor imprégné de vernis est réalisée pour solidifier le vernis.

Pendant les opérations de trempage/roulage 240 et de polymérisation 250, le rotor 10 est mis en rotation pour assurer une répartition la plus régulière possible du vernis sur l'ensemble du rotor. C'est au cours de ces opérations 240 et 250 qu'intervient l'invention, les réceptacles à vernis permettant de diriger l'écoulement du surplus de vernis et/ou de retenir ce surplus de vernis afin d'éviter les effets de peau sur la surface extérieure du rotor.

Bien que décrit à travers un certain nombre d'exemples, variantes et modes de réalisation, le rotor bobiné selon l'invention comprend divers variantes, modifications et perfectionnements qui apparaîtront de façon évidente à l'homme du métier, étant entendu que ces variantes, modifications et perfectionnements font partie de la portée de l'invention.

## Revendications

1. Rotor bobiné (10) pour machine électrique, comportant :
- un corps de rotor (15) cylindrique destiné à être monté autour d'un arbre de rotor d'axe de rotation XX, ledit corps de rotor comportant des dents (16) et des encoches (17) s'étendant axialement,
- des bobinages (13) électriques s'étendant axialement chacun autour d'une dent du corps de rotor,
- des cales isolantes (14) s'étendant axialement chacune dans une encoche du corps de rotor, entre deux bobinages consécutifs,
- une couche d'un vernis d'encollage répartie au moins sur les bobinages du rotor, et
- des réceptacles à vernis (141, 142) logés sur au moins une surface extérieure (14c) du rotor pour recevoir un surplus de vernis.

2. Rotor selon la revendication 1, **caractérisé en ce que** les réceptacles à vernis sont localisés sur une face extérieure (14c) des cales isolantes.

3. Rotor selon la revendication 1, **caractérisé en ce que** chaque cale isolante comporte, sur sa face extérieure, une surépaisseur (140) dans laquelle sont formés les réceptacles à vernis.

4. Rotor selon l'une quelconque des revendications 1 à 3, **caractérisé en ce que** les réceptacles à vernis comportent au moins un orifice traversant ou non-traversant.

5. Rotor selon la revendication 4, **caractérisé en ce que** les orifices ont une section de forme circulaire ou oblongue.

6. Rotor selon l'une quelconque des revendications 1 à 3, **caractérisé en ce que** les réceptacles comportent au moins un rainurage (142) assurant un écoulement du surplus de vernis.

7. Rotor selon les revendications 3 et 6, **caractérisé en ce que** les réceptacles comportent au moins un chanfrein (141) s'étendant axialement sur la face extérieure de la cale, le long de la surépaisseur.

8. Rotor selon les revendications 6 et 7, **caractérisé en ce que** le rainurage comporte un ensemble de rainures (142a,142b,142c) débouchant sur au moins un chanfrein (141), l'ensemble de rainures assurant un écoulement du surplus de vernis et le chanfrein assurant la retenue dudit surplus de vernis.

9. Rotor selon la revendication 8, **caractérisé en ce que** les rainures de l'ensemble de rainures sont parallèles les unes aux autres et orientées suivant une direction oblique par rapport à un axe de l'arbre du rotor.

10. Rotor selon la revendication 8, **caractérisé en ce que** les rainures de l'ensemble de rainures sont parallèles les unes aux autres et orientées suivant une direction perpendiculaire par rapport à un axe de l'arbre du rotor.

11. Machine électrique comportant un rotor et un stator, **caractérisée en ce que** le rotor est conforme à l'une quelconque des revendications précédentes.

12. Procédé de fabrication d'un rotor bobiné selon l'une quelconque des revendications 1 à 10, comportant les opérations suivantes :
- réalisation de réceptacles à vernis sur une surface extérieure d'un corps de rotor (15) ou une face extérieure (14c) d'au moins une cale (14) isolante,
- enroulement d'un fil électriquement conducteur autour des dents (16) du corps de rotor pour créer des bobinages (13a,13b),
- montage de cales isolantes dans chaque encoche (17) du corps de rotor, entre deux bobinages (13a et 13b),
- installation de disques de verrouillage (12) à chaque extrémité axiale des bobinages,
- trempage et roulage du rotor dans un bain de vernis, et
- polymérisation du rotor imprégné de vernis.
